# EUROPÄISCHE PATENTSCHRIFT

(11) **EP 1 824 865 B1**
(45) Veröffentlichungstag und Bekanntmachung des Hinweises auf die Patenterteilung: **17.06.2009**
(21) Anmeldenummer: 05803603.9
(22) Anmeldetag: 17.11.2005
(51) Int. Cl.: C07F 7/18

(54) **ALPHA-AMINOMETHYL-ALKOXYSILANE MIT HOHER REAKTIVITÄT UND VERBESSERTER STABILITÄT**
HIGHLY REACTIVE ALPHA-AMINOMETHYL-ALKOXYSILANES HAVING IMPROVED STABILITY
ALPHA-AMINOMETHYL-ALCOXYSILANES AYANT UNE ACTIVITE ELEVEE ET UNE STABILITE AMELIOREE

(30) Priorität: 09.12.2004 DE 102004059378
(43) Veröffentlichungstag der Anmeldung: 29.08.2007
(73) Patentinhaber: Wacker Chemie AG, 81737 München (DE)
(72) Erfinder: BRIEHN, Christoph, 81369 München (DE); STANJEK, Volker, 81477 München (DE); WEIDNER, Richard, 84489 Burghausen (DE)
(74) Vertreter: Fritz, Helmut
(86) Internationale Anmeldenummer: PCT/EP2005/012337
(87) Internationale Veröffentlichungsnummer: WO 2006/061091

(56) Entgegenhaltungen:
- EP-A- 0 291 787
- WO-A-03/018658
- WO-A-03/018704
- WO-A-20/04022618
- WO-A-20/04067605
- WO-A-20/04089961
- WO-A-20/05000931
- DE-A- 4 416 857
- DE-A1- 2 155 258
- US-A- 2002 120 072
- DATABASE BEILSTEIN [Online] BEILSTEIN INSTITUTE FOR ORGANIC CHEMISTRY, FRANKFURT-MAIN, DE; 27. Juni 1988 (1988-06-27), XP002363154 Database accession no. BRN 119744; BRN 110265 & ANDRIANOW, WOLKOWA: IZV. AKAD. NAUK SSSR SER. KHIM., 1957, Seiten 577-582,
- DATABASE BEILSTEIN [Online] BEILSTEIN INSTITUTE FOR ORGANIC CHEMISTRY, FRANKFURT-MAIN, DE; 1988, XP002363155 & LUKEVICS ET AL.: LATV. PSR ZINAT. AKAD. VESTIS KIHIM. SER., 1978, Seite 207,
- DATABASE BEILSTEIN [Online] BEILSTEIN INSTITUTE FOR ORGANIC CHEMISTRY, FRANKFURT-MAIN, DE; 1988, XP002363156 Database accession no. BRN 1103720 & LUKEVIC, E. ET AL: CHEM. HETEROCYCL. COMPD., Bd. 4, 1968, Seiten 689-690,
- DATABASE BEILSTEIN [Online] BEILSTEIN INSTITUTE FOR ORGANIC CHEMISTRY, FRANKFURT-MAIN, DE; 1988, XP002363157 Database accession no. BRN 510510; BRN 513756 & CERNOV ET AL.: RUSS. J. GEN. CHEM., Bd. 69, Nr. 9, 1999, Seiten 1398-1400,

## Beschreibung

Die Erfindung betrifft aminomethylfunktionelle Alkoxysilane, und deren Verwendung.

Organofunktionelle Alkoxysilane werden in den verschiedensten Bereichen verwendet. So können sie als Haftvermittler in anorganisch-organischen Verbundsystemen dienen. Sie werden zur Herstellung von Hybridmaterialen verwendet, die organische und anorganische bzw. siliconhaltige Strukturelemente aufweisen. Des weiteren nutzt man sie um (Nano-)Partikel mit organischen Funktionen auszustatten, mit denen sie z.B. in eine organische Matrix eingebaut werden können. Eine sehr wichtige Anwendung ist zudem die Herstellung von Prepolymeren, die bei Kontakt mit (Luft-)Feuchtigkeit zu festen Massen aushärten.

Derartige Prepolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilanterminierten Prepolymere bereits bei Raumtemperatur in der Lage, unter Abspaltung der Alkoxygruppen und Ausbildung von Si-O-Si-Bindungen miteinander zu kondensieren. Somit lassen sich diese Prepolymere u.a. als einkomponentige an der Luft härtende Systeme verwenden, welche den Vorteil einer einfachen Handhabung besitzen, da keine zweite Komponente zudosiert und eingemischt werden muß.

Ein weiterer Vorteil von alkoxysilanterminierten Prepolymeren besteht in der Tatsache, daß bei der Härtung weder Säuren noch Oxime oder Amine freigesetzt werden. Anders als bei Kleb- oder Dichtstoffen auf Isocyanatbasis entsteht auch kein CO₂, das als gasförmige Komponente zu einer Blasenbildung führen kann. Anders als isocyanatbasierende Systeme sind alkoxysilanterminierte Prepolymermischungen auch toxikologisch unbedenklich.

Je nach Gehalt an Alkoxysilangruppen und deren Aufbau bilden sich bei der Härtung dieses Prepolymertyps hauptsächlich langkettige Polymere (Thermoplaste), relativ weitmaschige dreidimensionale Netzwerke (Elastomere) oder aber hochvernetzte Systeme (Duroplaste).

Alkoxysilanfunktionelle Prepolymere können aus unterschiedlichen Bausteinen aufgebaut sein. Sie besitzen üblicherweise ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in US 6,207,766 und US 3,971,751. Daneben sind aber auch Systeme weit verbreitet, deren Rückgrat ganz oder zumindest zum Teil aus Organosiloxanen besteht, beschrieben u.a. in US 5,254,657.

Von zentraler Bedeutung bei der Prepolymerherstellung sind jedoch die monomeren Alkoxysilane, über die das Prepolymer mit den erforderlichen Alkoxysilanfunktionen ausgestattet wird. Dabei können prinzipiell die unterschiedlichsten Silane und Kupplungsreaktionen zum Einsatz kommen, z.B. eine Addition von Si-H-funktionellen Alkoxysilanen an ungesättigte Prepolymere oder eine Copolymerisation von ungesättigten Organosilanen mit anderen ungesättigten Monomeren. Ebenso sind nucleophile Additionen oder Substitutionen an Alkoxysilane, die über eine Carbonylfunktion verfügen, vorstellbar.

Bei einem anderen Verfahren werden alkoxysilanterminierte Prepolymere durch Umsatz von OH-funktionellen Prepolymeren mit isocyanatfunktionellen Alkoxysilanen hergestellt. Derartige Systeme sind beispielsweise in US 5,068,304 beschrieben. Die resultierenden Prepolymere zeichnen sich oftmals durch besonders positive Eigenschaften aus, z.B. durch eine sehr gute Mechanik der ausgehärteten Massen. Nachteilig ist jedoch die aufwendige und kostenintensive Herstellung der isocyanatfunktionellen Silane sowie die Tatsache, daß diese Silane toxikologisch äußerst bedenklich sind.

Günstiger ist hier oftmals ein Herstellungsverfahren für alkoxysilanterminierte Prepolymere, bei dem von Polyolen, z.B. von Polyether- oder Polyesterpolyolen, ausgegangen wird. Diese reagieren in einem ersten Reaktionsschritt mit einem Überschuß eines Di- oder Polyisocyanates. Anschließend werden die dabei erhaltenen isocyanatterminierten Prepolymere mit einem aminofunktionellen Alkoxysilan zu dem gewünschten alkoxysilanterminierten Prepolymer umgesetzt. Derartige Systeme sind beispielsweise in EP 1 256 595 oder EP 1 245 601 beschrieben. Die Vorteile dieser Systems liegen vor allem in den besonders positiven Eigenschaften der resultierenden Prepolymere. So zeichnen sich diese beispielsweise meist durch eine gute Reißfestigkeit der ausgehärteten Massen aus, die - zumindest teilweise - auf die in diesen Polymeren enthaltenen Urethan- und Harnstoffeinheiten und deren Fähigkeit zur Ausbildung von Wasserstoffbrückenbindungen zurückzuführen ist. Ein weiterer Vorteil dieser Prepolymersysteme stellt die Tatsache dar, daß die als Edukte benötigten aminofunktionellen Silane durch einfache und preisgünstige Verfahren zugänglich und toxikologisch weitgehend unbedenklich sind.

Nachteilig an den meisten bekannten und derzeit verwendeten Systemen ist jedoch deren nur mäßige Reaktivität gegenüber Feuchtigkeit, sowohl in Form von Luftfeuchtigkeit als auch in Form von - gegebenenfalls zugesetztem - Wasser. Um auch bei Raumtemperatur eine hinreichende Härtungsgeschwindigkeit zu erreichen, ist daher der Zusatz eines Katalysators unbedingt erforderlich. Das ist vor allem deshalb problematisch, da die in der Regel als Katalysatoren eingesetzten zinnorganischen Verbindungen toxikologisch bedenklich sind. Zudem enthalten die Zinnkatalysatoren oftmals auch noch Spuren hochtoxischer Tributylzinnderivate.

Besonders problematisch ist die relativ geringe Reaktivität der alkoxysilylfunktionellen Prepolymersysteme, wenn keine Methoxysilylgruppen sondern die nochmals unreaktiveren Ethoxysilylgruppen verwendet werden. Gerade ethoxysilylfunktionelle Prepolymere wären jedoch in vielen Fällen besonders vorteilhaft, weil bei ihrer Aushärtung lediglich Ethanol als Spaltprodukt freigesetzt wird.

Um Probleme mit toxischen Zinnkatalysatoren zu vermeiden, wurde bereits nach zinnfreien Katalysatoren gesucht. Denkbar sind hier vor allem titanhaltige Katalysatoren, z.B. Titantetraisopropoxylat oder Bis-(acetylacetonato)-diisobutyltitanat, die beispielsweise beschrieben sind in EP 885 933 A. Allerdings besitzen diese Titankatalysatoren den Nachteil, daß sie meist nicht in Kombination mit stickstoffhaltigen Verbindungen eingesetzt werden können, da letztere hier als Katalysatorgifte wirken. Der Einsatz von stickstoffhaltigen Verbindungen, z.B. als Haftvermittler, ist in vielen Fällen jedoch unvermeidbar. Zudem dienen Stickstoffverbindungen, z.B. Aminosilane, in vielen Fällen als Edukte bei der Herstellung der silanterminierten Prepolymere, so daß sie als kaum vermeidbare Verunreinigungen auch in Prepolymeren selbst enthalten sind.

Einen großen Vorteil können daher alkoxysilanterminierte Prepolymersysteme darstellen, wie sie beispielsweise in DE 101 42 050 A oder DE 101 39 132 A beschrieben sind. Diese Prepolymere zeichnen sich dadurch aus, daß sie Alkoxysilylgruppen enthalten, die nur durch einen Methylspacer von einem Stickstoffatom mit einem freien Elektronenpaar getrennt sind. Dadurch besitzen diese Prepolymere eine extrem hohe Reaktivität gegenüber (Luft-)Feuchtigkeit, so daß sie zu Prepolymerabmischungen verarbeitet werden können, die ohne metallhaltige Katalysatoren auskommen können, und dennoch bei Raumtemperatur mit z.T. extrem kurzen Klebfreizeiten bzw. mit sehr hoher Geschwindigkeit aushärten. Da diese Prepolymere somit über eine Aminfunktion in α-Position zur Silylgruppe verfügen, werden sie auch als α-alkoxysilanterminierte Prepolymere bezeichnet.

Diese α-alkoxysilanterminierten Prepolymere werden typischerweise durch eine Reaktion eines α-Aminosilans, d.h. eines aminomethylfunktionellen Alkoxysilans, mit einem isocyanatfunktionellen Prepolymer oder einer isocyanatfunktionellen Vorstufe des Prepolymers hergestellt. Gängige Beispiele für α-Aminosilane sind *N*-Cyclohexylaminomethyl-trimethoxysilan, *N*-Cyclohexylaminomethyl-methyldimethoxysilan, *N*-Ethylaminomethyl-trimethoxysilan, *N-*Ethylaminomethyl-methyldimethoxysilan, *N*-Butylaminomethyl-trimethoxysilan, *N*-Cyclohexylaminomethyl-triethoxysilan *N-*Cyclohexylaminomethyl-methyldiethoxysilan etc..

Ein entscheidender Nachteil dieser α-alkoxysilanfunktionellen Prepolymersysteme ist jedoch die nur mäßige Stabilität der für ihre Synthese benötigten α-Aminosilane. So kann insbesondere die Si-C-Bindung dieser Silane z.T. sehr leicht gespalten werden. Vergleichbare Stabilitätsprobleme sind bei den herkömmlichen γ-Aminopropyl-alkoxysilanen unbekannt.

Besonders deutlich zeigt sich diese Instabilität der α-Aminosilane in Gegenwart von Alkohol oder Wasser. So wird beispielsweise Aminomethyl-trimethoxysilan in Gegenwart von Methanol innerhalb weniger Stunden quantitativ zu Tetramethoxysilan abgebaut. Mit Wasser reagiert es zu Tetrahydroxysilan bzw. zu höheren Kondensationsprodukten dieses Silans. Entsprechend reagiert Aminomethyl-methyldimethoxysilan mit Methanol zu Methyltrimethoxysilan und mit Wasser zu Methyltrihydroxysilan bzw. zu höheren Kondensationsprodukten dieses Silans. Etwas stabiler sind N-substituierte α-Aminosilane, z.B. *N*-Cyclohexylaminomethyl-methyldimethoxysilan oder N-Cyclohexylaminomethyl-trimethoxysilan. Doch in Gegenwart von Spuren von Katalysatoren oder sauren sowie basischen Verunreinigungen werden auch diese Silane innerhalb weniger Stunden vom Methanol quantitativ zu N-Methyl-cyclohexylamin und Methyltrimethoxysilan bzw. Tetramethoxysilan abgebaut. Mit Wasser reagieren sie zu N-Methyl-cyclohexylamin und Methyltrihydroxysilan bzw. Tetrahydroxysilan oder den höherkondensierten Homologen dieser Silane. Auch die meisten übrigen *N*-substituierte α-Aminosilane mit sekundärem Stickstoffatom entsprechend des Standes der Technik zeigen dieselbe Abbaureaktion.

Aber auch in Abwesenheit von Methanol oder Wasser sind diese α-Aminosilane nur mäßig stabil. So kann es vor allem bei erhöhten Temperaturen und in Anwesenheit von Katalysatoren oder katalytisch wirksamen Verunreinigungen ebenfalls zu einer Zersetzung der α-Silane unter Spaltung der Si-C-Bindung kommen.

Die nur mäßige Stabilität der α-Aminosilane wirkt sich meist auch deshalb stark nachteilig aus, da diese sich auch unter den Reaktionsbedingungen der Prepolymersynthese zumindest teilweise zersetzen können. Dies erschwert nicht nur die Prepolymersynthese sondern führt in der Regel auch zu einer - zum Teil massiven - Verschlechterung der Polymereigenschaften, da dabei auch Prepolymere entstehen, die nicht mit den Aminosilanen sondern durch deren Zersetzungsprodukte terminiert worden sind.

Etwas stabiler sind lediglich α-Aminosilane mit sekundärem Stickstoffatom, die am Stickstoffatom einen elektronenziehenden Substituenten tragen, wie z.B. N-Phenylaminomethyl-trimethoxysilan oder *O*-Methyl-carbamatomethyl-trimethoxysilan. Jedoch sind die Aminofunktionen dieser Silane auch gegenüber Isocyanatgruppen deutlich weniger reaktiv, weshalb sie zur Herstellung von silanterminierten Prepolymeren aus isocyanatfunktionellen Vorstufen in der Regel ungeeignet sind. So ist das o.g. *O*-Methyl-carbamatomethyl-trimethoxysilan so reaktionsträge, daß auch nach mehrstündigem Kochen dieses Silans mit einem Prepolymer, das über aliphatische Isocyanatgruppen verfügt, praktisch keine Reaktion feststellbar ist. Auch Katalysatoren wie Dibutylzinndilaurat führen dabei zu keiner nennenswerten Verbesserung. Einzig die N-phenylsubstituierten Silane wie N-Phenylaminomethyl-trimethoxysilan besitzt gegenüber Isocyanatfunktionen eine gewisse (wenngleich oftmals noch immer unzureichende) Reaktivität. Jedoch reagieren sie dabei zu aromatisch substituierten Harnstoffeinheiten, die Photo-Fries-Umlagerungen eingehen können und somit extrem UVlabil sind. Die entsprechenden Produkte sind somit für die allermeisten Anwendungen gänzlich ungeeignet.

In E. Lukevics, E. P. Popova, Latv. PSR Zinat. Akad. Vestis, Kim. Ser. 1978, (2), 207-11 wird ein Piperazinosilan entsprechend der Formel [1] beschrieben.

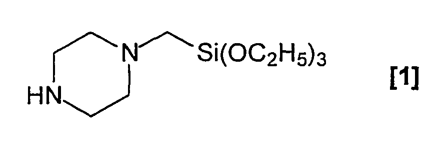

Allerdings werden dort lediglich spektroskopische und toxikologische Daten dieser Verbindung beschrieben. So finden sich in dieser Veröffentlichung keinerlei Anhaltspunkte, daß α-Piperazinomethyl-alkoxysilane wie die Verbindung [1] zwar die für α-Aminomethyl-alkoxysilane typische hohe Reaktivität besitzen, sich aber gleichzeitig durch eine deutlich verbesserte Stabilität auszeichnen.

Des weiteren werden Piperazinosilane auch noch in zahlreichen weiteren Literaturstellen genannt, z.B. in EP 0 441 530. Allerdings werden dort ausschließlich herkömmliche γ-Silane beschrieben, deren Alkoxysilylgruppe durch einen Propylspacer von dem Piperazinring getrennt ist. Diese Verbindungen sind - wie sämtliche γ-Aminopropylsilane - zwar relativ stabil, besitzen gegenüber (Luft-)Feuchtigkeit aber nur die übliche, sehr mäßige Reaktivität.

Es bestand somit die Aufgabe, α-aminomethylfunktionelle Alkoxysilane mit einer hohen Reaktivität gegenüber (Luft-) Feuchtigkeit zur Verfügung zu stellen, die sich einerseits durch eine verbesserte Stabilität auszeichnen, andererseits aber auch über eine reaktive Funktion verfügen, mit der sie an ein organisches System, bevorzugt ein organisches Prepolymer, angebunden werden können.

Gegenstand der Erfindung sind Alkoxysilane (A), welche die allgemeine Formel [4] 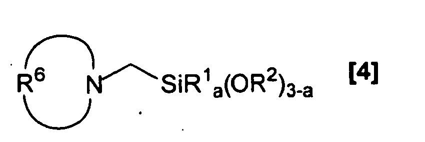 aufweisen, wobei
- **R¹**: einen gegebenenfalls substituierten Kohlenwasserstoffrest oder eine =N-CR³₂-Gruppe,
- **R²**: einen Alkylrest mit 1-6 Kohlenstoffatomen,
- **a**: die Werte 0, 1 oder 2 annehmen kann,
- **R³**: Wasserstoff oder einen gegebenenfalls substituierten Kohlenwasserstoffrest darstellt,
- **R⁴**: einen gegebenenfalls substituierten Alkyl-, Aryl- oder Arylalkylrest, der über mindestens eine Carboxyl-, Carbonylgruppe oder eine gegenüber Isocyanaten reaktive OH-, SH- oder NHR⁷-Gruppe verfügt, wobei die Alkylkette gegebenenfalls durch Sauerstoff, Carbonylgruppen, Schwefel oder NR⁷-Gruppen unterbrochen sein kann,
- **R⁶**: einen difunktionellen, gegebenenfalls substituierten Alkyl- oder Arylalkyrest, der eine gegenüber Isocyanaten reaktive NH-Funktion oder eine NR⁴-Funktion verfügt oder durch mindestens eine gegenüber Isocyanaten reaktive OH-, SH- oder NHR⁷-Gruppe substituiert ist, wobei die Alkylkette gegebenenfalls durch Sauerstoff, Schwefel oder NR⁷-Gruppen unterbrochen sein kann, und
- **R⁷**: Wasserstoff oder einen gegebenenfalls substituierten Alkyl-, Aryl- oder Arylalkylrest darstellt,
wobei das Silan der Formel [1] 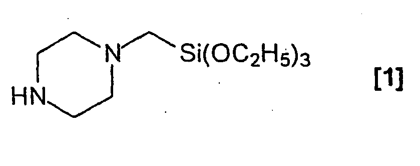 ausgeschlossen ist.

Die Erfindung beruht auf der Entdeckung, dass α-Aminomethylsilane, die in α-Position zur Silylgruppe über ein tertiäres Stickstoffatom verfügen, gegenüber (Luft-) Feuchtigkeit bzgl. einer Si-C-Bindungsspaltung vollständig stabil sind. Jedoch können herkömmliche α-Aminosilane mit tertiärem Stickstoffatom, wie z.B. *N,N*-Diethylaminomethyl-trimethoxysilan, *N,N-*Dibutylaminpmethyl-trimethoxysilan, *N,N*-Diethylaminomethyltriethoxysilan, *N,N*-Dibutylaminomethyl-triethoxysilan etc., die ob der fehlenden reaktiven Funktion (F) für viele Reaktionen nicht brauchbar sind, z.B. nicht mit isocyanatfunktionellen Vorstufen zu α-alkoxysilanfunktionellen Prepolymeren verarbeitet werden.

Die erfindungsgemäßen α-Aminosilane (A) sind deutlich stabiler als herkömmliche α-Aminosilane mit primärer oder sekundärer Aminofunktion in α-Position zur Silylgruppe. So sind beispielsweise die erfindungsgeinäßen Silane *N-*(Methyldiethoxysilylmethyl)-piperazin, *N-*(Methyldimethoxysilylmethyl)-piperazin oder N-(Trimethoxysilylmethyl)-piperazin auch in methanolischer Lösung (10 Gew.-%) über mehrere Wochen stabil.

Herkömmliche, nicht erfindungsgemäße aminomethylfunktionelle Alkoxysilane mit primärer oder sekundärer Aminfunktion haben sich unter denselben Bedingungen bereits nach kurzer Zeit weitgehend zersetzt. Im folgenden sind einige typische Halbwertszeiten herkömmlicher α-Aminosilane aufgelistet:
Aminomethyl-methyldimethoxysilan: t_{1/2} = 6 h
Cyclohexylaminomethyl-methyldimethoxysilan: t_{1/2} = 1 Woche
Aminomethyl-trimethoxysilan: t_{1/2} = 19 h
Cyclohexylaminomethyl-trimethoxysilan: t_{1/2} = 3 Tage
1-Butylaminomethyl-trimethoxysilan: t_{1/2} = 1 Woche

Die Zersetzung der α-Aminomethylsilane wurde dabei NMRspektroskopisch detekiert.

Die Reste R¹ weisen vorzugsweise 1 bis 12, insbesondere 1 bis 6 C-Atome auf. Sie sind vorzugsweise Alkyl-, Cycloalkyl-, Aryl- oder Arylalkylreste. Als Reste R¹ werden Methyl-, Ethyl- oder Phenylgruppen bevorzugt, besonders bevorzugt die Methylgruppe. Bei den Resten R² handelt es sich bevorzugt um Methyl- oder Ethylgruppen. Die Reste R³ stellen bevorzugt Wasserstoff oder einen gegebenenfalls mit Chlor- oder Fluor substituierten Kohlenwasserstoffrest mit 1 bis 6 C-Atomen dar, insbesondere Wasserstoff.

In einer bevorzugten Ausführungform der Erfindung stellt die reaktive Funktion (F) der Silane (A) eine Carboxyl- oder Carbonylgruppe, besonders bevorzugt eine Aldehyd- oder Ketogruppe dar.

In einer weiteren bevorzugten Ausführungsform der Erfindung stellt die reaktive Funktion (F) der Silane (A) eine NH-, OH- oder SH-Funktion, besonders bevorzugt eine NH-Funktion dar. Diese Funktionen sind gegenüber Isocyanaten reaktiv.

Bevorzugt sind Alkoxysilane (A) der allgemeinen Formeln [3] und [4] 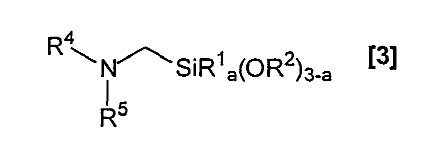 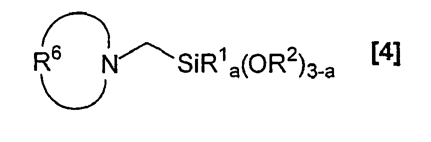 wobei
- R⁴: einen gegebenenfalls substituierten Alkyl-, Aryl- oder Arylalkylrest, der über mindestens eine Carboxyl-, Carbonylgruppe oder eine gegenüber Isocyanaten reaktive OH- SH- oder NHR⁷-Gruppe verfügt, wobei die Alkylkette gegebenenfalls durch Sauerstoff, Carbonylgruppen, Schwefel oder NR⁷-Gruppen unterbrochen sein kann,
- R⁵: einen gegebenenfalls substituierten Alkyl-, Aryl- oder Arylalkylrest, wobei die Alkylkette gegebenenfalls durch Sauerstoff, Carbonylgruppen, Schwefel oder NR⁷-Gruppen unterbrochen sein kann, oder einen Rest R⁴,

Die Alkylreste R⁴ können verzweigt, unverzweigt oder cyclisch sein. Es werden Alkylreste mit 2-10 Kohlenstoffatomen bevorzugt, die über eine OH-Funktion oder Monoalkylaminogruppe verfügen, wobei Monoalkylaminogruppen besonders bevorzugt werden. Die Alkyl- oder Arylalkyreste R⁶ können verzweigt oder unverzweigt sein. Als Alkylreste R⁶ werden difunktionelle Alkylreste mit 2-10 Kohlenstoffatomen bevorzugt, die in der Alkylkette über eine Carbonyl- oder NH-Funktion verfügen. Die Alkyl- oder Arylalkyreste R⁷ können verzweigt oder unverzweigt sein. Als Reste R⁷ werden Wasserstoff und Alkylgruppen mit 1-6 Kohlenstoffatomen bevorzugt.

Bevorzugt sind auch Alkoxysilane (A) der allgemeinen Formeln [6] und [7] 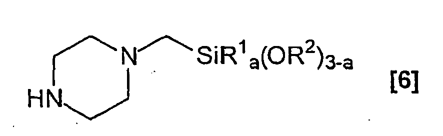 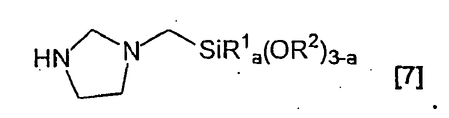 wobei R¹, R² und a die bei der allgemeinen Formel [4] angegebenen Bedeutungen aufweisen.

Die Silane (A) werden bevorzugt durch die Reaktion der entsprechenden α-Halogenmethylalkoxysilane, besonders bevorzugt der α-Chlormethylalkoxysilane, mit sekundären Aminen hergestellt. Dabei wird das Chloratom des α-Chlorsilans durch das jeweilige sekundäre Amin substituiert. Dies kann sowohl mit als auch ohne Katalysator erfolgen, bevorzugt wird die Reaktion aber ohne Katalysator durchgeführt. Die Reaktion kann sowohl in Substanz als auch in einem Lösungsmittel durchgeführt werden. Das Amin kann dabei gleichzeitig als Säurefänger für den bei der nucleophilen Substitution freigesetzten Halogenwasserstoff dienen. Hier kann jedoch auch ein anderer Säurefänger zugesetzt werden. Bei einer bevorzugen Variante der Silanherstellung wird das Silan im Überschuß eingesetzt.

Zur Herstellung der besonders bevorzugten Silane der allgemeinen Formeln [6] oder [7] kann bei einer entsprechenden Reaktion von Piperazin bzw. von Tetrahydroimidazol ausgegangen werden.

Die nachstehenden Verwendungen der Silane der allgemeinen Formeln [4], [6] und [7] können mit dem Silan der Formel [1] oder auch ohne Silan der Formel [1] durchgeführt werden.

Die Silane der allgemeinen Formeln [4], [6] und [7] werden bevorzugt zur Synthese von silanfunktionellen Prepolymeren (P) eingesetzt. Die Prepolymere (P) werden dabei bevorzugt hergestellt, indem die Silane der allgemeinen Formeln [4], [6] und [7]
a) mit einem isocyanatterminierten Prepolymer (P1) umgesetzt werden, oder
b) mit einem NCO-Gruppen enthaltenden Precursor des Prepolymers (P) zu einem Silylgruppen enthaltendem Precursor umgesetzt werden, der dann in weiteren Reaktionsschritten zu dem fertigen Prepolymer (P) umgesetzt wird.

Bevorzugt werden dabei die Mengenverhältnisse der einzelnen Komponenten so gewählt, dass sämtliche in der Reaktionsmischung vorhandene Isocyanatgruppen abreagieren. Die resultierenden Prepolymere (P) sind somit bevorzugt isocyanatfrei.

Wie beschrieben können die silanfunktionellen Prepolymere (P) bei Kontakt mit der (Luft-)Feuchtigkeit durch eine Hydrolyse und Kondensation der hochreaktiven Alkoxysilylgruppen der Silane der allgemeinen Formeln [4], [6] und [7] aushärten. Die Polymere (P) können für zahlreiche verschiedene Anwendungen im Bereich der Kleb-, Dicht- und Fugendichtstoffe, Oberflächenbeschichtungen sowie auch bei der Herstellung von Formteilen angewendet werden.

Ein anderes Einsatzgebiet der Silane der allgemeinen Formeln [4], [6] und [7] stellt die Modifizierung von Acrylaten oder Epoxiden dar. Dabei werden monomere, oligomere oder polymere Verbindungen mit mindestens einer Acrylat- oder Epoxidfunktion mit den Silanen der allgemeinen Formeln [4], [6] und [7] umgesetzt, wobei Produkte erhalten werden, die durch die Hydrolyse und Kondensation der Silaneinheit aushärten können. D.h. die Acrylat- bzw. Epoxidhärtung des jeweiligen Systems wird ganz oder auch nur teilweise durch eine Silanhärtung ersetzt. Besonders bevorzugt wird dabei die Umsetzung der Silane der allgemeinen Formeln [4], [6] und [7] mit epoxyfunktionellen Verbindungen.

Ein weiteres bevorzugtes Einsatzgebiet der Silane der allgemeinen Formeln [4], [6] und [7] stellt die Herstellung von silanmodifizerten Partikeln (Pa), insbesondere anorganischen Partikeln (Pa) dar. Zu diesem Zweck werden die Silane (A) mit anorganischen Partikeln (Pa1) umgesetzt.

Als Partikel (Pa1) eignen sich dabei sämtliche Metalloxid- und Metallmischoxid-Partikel (z.B. Aluminiumoxide wie Korund, Aluminiummischoxide mit anderen Metallen und/oder Silicium, Titanoxide, Zirkonoxide, Eisenoxide etc.) oder Siliciumoxid-Partikel (z.B. kolloidale Kieselsäure, pyrogene Kieselsäure, gefällte Kieselsäure, Kieselsole). Die Partikel (Pa1) zeichnen sich weiter dadurch aus, daß sie auf ihrer Oberfläche über Funktionen verfügen, die ausgewählt werden aus Metallhydroxid (MeOH), Siliciumhydroxid (SiOH), Me-O-Me, Me-O-Si, Si-O-Si, Me- OR³ und Si-OR³, über die eine Reaktion mit den Silanen der allgemeinen Formeln [4], [6] und [7] erfolgen kann. Die Partikel (Pa1) besitzen bevorzugt einen mittleren Durchmesser von kleiner 1000 nm, besonders bevorzugt kleiner 100 nm (wobei die Teilchengröße durch Transmissionselektronenmikroskopie bestimmt wird).

In einer besonders bevorzugten Ausführungsform der Erfindung bestehen die Partikel (Pa1) aus pyrogener Kieselsäure. In einer weiteren bevorzugten Ausführung der Erfindung werden als Partikel (Pa1) kolloidale Silicium- oder Metalloxide eingesetzt, die im allgemeinen als Dispersion der entsprechenden Oxidteilchen von Submikrongröße in einem wäßrigen oder organischen Lösungsmittel vorliegen. Dabei können unter anderem die Oxide der Metalle Aluminium, Titan, Zirkonium, Tantal, Wolfram, Hafnium, Zinn verwendet werden.

Bei der Funktionalisierung der Partikel (Pa1) reagieren die hochreaktiven Alkoxysilylfunktionen der Silane der allgemeinen Formeln [4], [6] und [7] unter Abspaltung eines Alkoholmoleküls (R²OH) mit den freien MeOH- oder SiOH-Funktionen auf der Partikeloberfläche. Werden dabei Monoalkoxysilane, d.h. Silane der allgemeinen Formeln [4], [6] und [7] mit a = 2, eingesetzt, so ist bei Funktionalisierung der Partikel (Pa1) eine Zugabe von Wasser nicht erforderlich, was gegebenenfalls besonders wünschenswert sein kann. Werden zur Funktionalisierung der Partikel (Pa1) Di- oder Trialkoxysilane, d.h. Silane der allgemeinen Formeln [4], [6] und [7] mit a = 0 bzw. 1 eingesetzt, so ist die Hydrolyse und Kondensation der Alkoxysilylgruppen der Silane der allgemeinen Formeln [4], [6] und [7] ohne Wasserzusatz in der Regel unvollständig. Somit ist ein Wasserzusatz notwendig, sofern eine vollständige Hydrolyse und Kondensation der Alkoxysilylgruppen erwünscht ist.

Aufgrund der hohen Reaktivität der Silane der allgemeinen Formeln [4], [6] und [7] eignen sich diese Verbindungen wesentlich besser zur Herstellung von silanmodifizierten Partikeln (Pa) als herkömmliche, deutlich reaktionsträgere Silane entsprechend des Standes der Technik. Dies gilt insbesondere, wenn zur Partikelmodifizierung die oftmals besonders vorteilhaften aber meist weniger reaktiven - Monoalkoxysilane, d.h. Silane Silane der allgemeinen Formeln [4], [6] und [7] mit a = 2, eingesetzt werden. Die Umsetzungen der Partikel (Pa1) mit den hochreaktiven Silanen der allgemeinen Formeln [4], [6] und [7] verlaufen schnell und vollständig. Gegenüber anderen ebenfalls hochreaktiven α-Aminomethylsilanen entsprechend des Standes der Technik besitzen die Silane der allgemeinen Formeln [4], [6] und [7] dabei den Vorteil einer höheren Stabilität.

Bei der Partikelmodifizierung mit den Silane der allgemeinen Formeln [4], [6] und [7] können auch Katalysatoren zugegeben werden. Dabei können sämtliche zu diesem Zwecke üblicherweise verwendeten Katalysatoren wie organische Zinnverbindungen, z.B. Dibutylzinndilaurat, Dioctylzinndilaurat, Dibutylzinndiacetylacetonat, Dibutylzinndiacetat oder Dibutylzinndioctoat etc., organische Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethyl-morpholin etc., eingesetzt werden. Auch organische oder anorganische Brönstedsäuren wie Essigsäure, Trifluoressigsäure, Salzsäure, Phoshorsäure und deren Mono- und/oder Diester, wie z.B. Butylphosphat, (Iso-) Propylphosphat, Dibutylphosphat etc. und Säurechloride wie Benzoylchlorid sind als Katalysatoren geeignet. Besonders bevorzugt werden jedoch schwermetallfreie Katalysatoren bzw. der gänzliche Verzicht auf Katalysatoren.

Durch die Funktionalisierung der Partikel (Pa1) mit den Silanen der allgemeinen Formeln [4], [6] und [7] lassen sich Partikel (Pa) mit z.T. völlig neuen Eigenschaften erhalten. So lassen sich u.a. Verträglichkeit und Dispergierbarkeit der entsprechenden Partikel in einer organischer Matrix erheblich steigern. Zudem können die modifizierten Partikel (Pa) über die durch die Modifizierung eingeführten reaktiven Funktionen (F) oftmals auch chemisch in die entsprechende Matrix eingebaut werden. So können die erfindungsgemäß modifizierten Partikel (Pa) u.a. in organischen Polymeren zur Verbesserung von mechanischen Eigenschaften verwendet werden.

In einer weiteren bevorzugten Anwendung werden die Silane der allgemeinen Formeln [4], [6] und [7] mit Siliconharzen (H1) zu organosilanmodifizierten Siliconharzen (H) umgesetzt. Besonders bevorzugt werden dabei Siliconharze (H1) der allgemeinen Formel [11]

(R¹⁰₃SiO_{1/2})ₑ(R¹⁰₂SiO_{2/2})_{f}(R¹⁰SiO_{3/2})_{g}(SiO_{4/2})ₕ [11]

eingesetzt, wobei
- R¹⁰: eine OR¹¹-Funktion, eine OH-Funktion, einen gegebenenfalls halogen-, hydroxyl-, amino-, epoxy-, phosponato-, thiol-, (meth)acryl-, oder auch NCO-substituierten Kohlenwasserstoffrest mit 1-18 Kohlenstoffatomen, wobei die Kohlenstoffkette durch nicht benachbarte Sauerstoff-, Schwefel-, oder NR4-Gruppen unterbrochen sein kann,
- R¹¹: einen gegebenenfalls substituierten einwertigen Kohlenwasserstoffrest mit 1-18 Kohlenstoffatomen,
- e: einen Wert von größer oder gleich 0,
- f: einen Wert von größer oder gleich 0,
- g: einen Wert von größer oder gleich 0 und
- h: einen Wert von größer oder gleich 0 bedeuten.

Auch die Modifizierung der Siliconharze (H1) gelingt durch eine Reaktion der hochreaktiven Alkoxysilylgruppen der Silane der allgemeinen Formeln [4], [6] und [7] mit freien SiOH-Funktionen des Siliconharzes (H1). Die Silane der allgemeinen Formeln [4], [6] und [7] weisen dabei dieselben Vorteile gegenüber Silanen entsprechend des Standes der Technik auf, die bereits bei der Funktionalisierung der rein anorganischen partikel (Pa1) beschrieben worden sind.

Ein weiteres Verfahren zur Herstellung der organosilanmodifizierten Siliconharze (H) kann selbstverständlich auch erfolgen, in dem die Silane der allgemeinen Formeln [4], [6] und [7] bereits während der Harzherstellung durch eine Cokondenstation direkt in des Harz mit eingebaut werden. Eine weitere Möglichkeit zur Synthese der Siliconharze (H)stellt eine Äquilibrierungsreaktion von Harzen (H1) mit den Silane der allgemeinen Formeln [4], [6] und [7] und gegebenenfalls Wasser dar.

Die mit den Silane der allgemeinen Formeln [4], [6] und [7] modifizierten Siliconharze (H) können u.a. zur Eigenschaftsverbesserung von organischen Polymeren eingesetzt werden.

Ein weiteres bevorzugtes Einsatzgebiet der Silane der allgemeinen Formeln [4], [6] und [7] stellt die Herstellung von organomodifizierten Siliconölen (S) durch eine Umsetzung der Silane der allgemeinen Formeln [4], [6] und [7] mit OH-funktionellen Siliconölen (S1) dar. Die Siloxane (S1) können dabei verzweigt oder unverzweigt sein. Besonders bevorzugt werden jedoch Siloxane (S1) der allgemeinen Formel [12]

HO-[Si(R¹²)₂-O-]ₙ-H [12]

eingesetzt, in der
- R¹²: einen Kohlenwasserstoffrest mit 1 bis 12 Kohlenstoffatomen, bevorzugt Methylreste, und
- n: eine Zahl von 1 bis 3000, bevorzugt eine Zahl von 10 bis 1000 darstellen.

Auch die Modifizierung der Siloxane (S1) erfolgt durch eine Reaktion der hochreaktiven Alkoxysilylgruppen der Silane der allgemeinen Formeln [4], [6] und [7] mit freien SiOH-Funktionen des Siloxans (S1).

Ein weiteres Verfahren zur Herstellung der organosilanmodifizierten Siloxane (S) kann selbstverständlich auch erfolgen, in dem die Silane der allgemeinen Formeln [4], [6] und [7] bereits während der Siloxanherstellung durch eine Cokondenstation direkt in die Siloxankette mit eingebaut werden. Eine weitere Möglichkeit zur Synthese der Siloxane (S) stellt eine Äquilibrierungsreaktion von Siloxanen (S1) mit den Silanen (A) und gegebenenfalls Wasser dar.

Bevorzugt werden dabei Monoalkoxysilane, d.h. Silane der allgemeinen Formeln [4], [6] und [7] mit a = 2, eingesetzt. Der Vorteil der Monoalkoxysilane liegt in der Tatsache, daß sie bei einer Reaktion mit den Siloxanen (S1) letztere zwar mit Organofunktionen ausstatten können, dabei aber die Kettenenden der Siloxane (S1) ausschließlich terminieren, ohne daß es zu einer Kettenverlängerung kommt.

Ebenso bevorzugt ist der Einsatz einer Mischung aus Monoalkoxysilanen, d.h. Silanen Silane der allgemeinen Formeln [4], [6] und [7] mit a = 2, und Dialkoxysilanen, d.h. Silanen der allgemeinen Formeln [4], [6] und [7] mit a = 1. Erstere führen dabei zu einer Terminierung der Siloxankettenenden, während letztere zu einer Kettenverlängerung führen. Durch eine geeignete Wahl des Mengenverhältnisses von Mono- und Dialkoxysilanen sowie geeigneter Kettenlängen der Siloxane (S1) lassen sich so sowohl die mittlere Kettenlängen als auch der mittlere Funktionalisierungsgrad der resultierenden organomodifizierten Siloxane (S) beliebig einstellen.

Bei der Funktionalisierung der Siloxane (S1) weisen die Silane der allgemeinen Formeln [4], [6] und [7] dieselben Vorteile gegenüber dem Stand der Technik auf, die bereits bei der Funktionalisierung der Partikel (Pa1) beschrieben worden sind.

Besonders bevorzugt werden dabei Silane der allgemeinen Formeln [4], [6] und [7] eingesetzt, deren organische Funktion (F) eine NH-Gruppe umfaßt. Dabei werden aminofunktionelle Siloxane (S) erhalten, für die es ebenso wie für herkömmliche aminofunktionelle Siloxane, wie sie aus Siloxanen (S1) und Silanen entsprechend des Standes der Technik hergestellt werden können, zahlreiche verschiedene Anwendungen, z.B. in der Textilveredelung, gibt.

Des weiteren können die aminofunktionellen Siloxane (S) auch mit weiteren organischen Verbindungen zu Copolymeren umgesetzt werden, die neben den Siloxanen auch über organische Strukturelemente verfügen. Als organische Verbindungen werden dabei bevorzugt difunktionelle monomere, oligomere oder polymere Verbindungen eingesetzt.

Besonders bevorzugt werden als organische Verbindungen Di- oder Polyisocyanate sowie isocyanatfunktionellen Prepolymere eingesetzt. Diese reagieren mit den aminofunktionellen Siloxanen (S) zu Copolymeren, die in ihren organischen Strukturelementen Harnstoff- und gegebenenfalls auch noch zusätzliche Urethangruppen aufweisen. Derartige Siloxan-Harnstoff-Copolymere zeichnen sich durch besonders interessante Eigenschaften aus. So besitzen lineare Siloxan-Harnstoff-Copolymere beispielsweise bei Raumtemperatur oftmals elastomere Eigenschaften, welche durch die Wasserstoffbrückenbindungen der Harnstoff- und gegebenenfalls auch vorhandenen Urethaneinheiten verursacht werden. Bei höheren Temperaturen jedoch brechen die Wasserstoffbrückenbindungen zusammen, so daß die Siloxan-Harnstoff-Copolymere dann wie herkömmliche thermoplastische Polymere verarbeitet werden können.

Als Di- oder Polyisocyanate für die Herstellung derartiger Siloxan-Harnstoff-Copolymere können prinzipiell sämtliche gebräuchliche Isocyanate eingesetzt werden, wie sie in der Literatur vielfach beschrieben sind. Besonders bevorzugt werden jedoch Diisocyanate, mit denen sich die oben beschreibenen linearen Copolymere erhalten lassen. Gängige Diisocyanate sind beispielsweise Diisocyanatodiphenylmethan (MDI), Tolylendiisocyanat (TDI), Diisocyanatonaphthalin (NDI), Isophorondiisocyanat (IPDI), perhydriertes MDI (H-MDI) oder auch von Hexamethylendiisocyanat (HDI). Falls die UV-Stabilität der Siloxan-Harnstoff-Copolymere bei der jeweiligen Anwendung von Bedeutung ist, werden bevorzugt aliphatische Isocyanate verwendet.

Anstelle der monomeren Di- oder Polyisocyanate können auch oligomere oder polymere Isocyanatprepolymere als Reaktionspartner für die aminofunktionellen Siloxane (S) eingesetzt werden. Dabei werden Copolymere mit größeren organischen Strukturelementen erhalten. Die Isocyanatprepolymere sind dabei in der Regel aus Di- oder Polyisocyanaten und Polyolen, z.B. Polyether- oder Polyesterpolyolen, sowie monomeren Alkoholen mit mindestens zwei OH-Gruppen zugänglich. Dabei ist die Reihenfolge der Reaktionsschritte bei der Herstellung von derartigen Siloxan-Harnstoff-Polyol-Copolymeren prinzipiell beliebig. D.h. es ist ebenso möglich, die aminofunktionellen Siloxane (S) in einem ersten Reaktionsschritt mit einem Überschuß von Di- oder Polyisocyanaten umzusetzen, und die überschüssigen Isocyanatfunktionen erst in einem zweiten Reaktionsschritt mit einem monomeren, oligomeren oder polymeren Di- oder Polyol bzw. Di- oder Polyamin umzusetzen.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1:

### Herstellung von N-[(Methyldiethoxysilyl)-methyl]-piperazin:

377 g (4,4 mol) Piperazin und 566 g Dioxan als Lösungsmittel werden in einem 2 Liter 4-Hals-Kolben vorgelegt und anschließend mit Stickstoff inertisiert. Man heizt auf eine Temperatur von 90 °C auf bis sich das Piperazin vollständig gelöst hat. Anschließend wird auf 80 °C abgekühlt. Bei dieser Temperatur tropft man 179,2 g (0,88 mol) Chlorethylmethyldiethoxysilan über 2 h zu und rührt für weitere 2 Stunden bei 80 °C. Nach einer Zugabe von ca. 1/3 der Silanmenge fällt vermehrt Piperazin-hydrochlorid als Salz aus, jedoch bleibt die Suspension bis zum Ende der Reaktion gut rührbar. Die Suspension wird über Nacht stehen lassen. Anschließend wird das ausgefallene Salz abfiltriert und das Lösungsmittel sowie Teile des überschüssigen Piperazins bei 60 - 70 °C destillativ entfernt.. Der Rückstand wird auf 4 °C abgekühlt, wobei das in der Reaktionsmischung verbliebene Piperazin ausfällt. Dieses wird abfiltriert. Das Filtrat wird destillativ gereinigt (108 - 114 °C bei 8 mbar). Es wird eine Ausbeute von 123,4 g, d.h. ca. 60 % bezogen auf die eingesetzte Silanmenge, erreicht.

### Beispiel 2:

### Herstellung von N-[(Ethoxydimethylsilyl)-methyl]-piperazin:

482,0 g (5,6 mol) Piperazin und 723 g Dioxan als Lösungsmittel werden in einem 2 Liter 4-Hals-Kolben vorgelegt und anschließend mit Stickstoff inertisiert. Man heizt auf eine Temperatur von 90 °C auf bis sich das Piperazin vollständig gelöst hat. Anschließend wird auf 80 °C abgekühlt. Bei dieser Temperatur tropft man 155,3 g (1,12 mol) Chlormethyldimethylethoxysilan über 2 h zu und rührt für weitere 2 Stunden bei 80 °C. Nach einer Zugabe von ca. 1/3 der Silanmenge fällt vermehrt Piperazin-hydrochlorid als Salz aus, jedoch bleibt die Suspension bis zum Ende der Reaktion gut rührbar. Die Suspension wird über Nacht stehen lassen. Anschließend wird das ausgefallene Salz abfiltriert und das Lösungsmittel sowie Teile des überschüssigen Piperazins bei 60 - 70 °C destillativ entfernt. Der Rückstand wird auf 4 °C abgekühlt, wobei das in der Reaktionsmischung verbliebene Piperazin ausfällt. Dieses wird abfiltriert. Das Filtrat wird destillativ gereinigt (93 °C bei 12 mbar). Es wird eine Ausbeute von 109,4 g d.h. 52 % bezogen auf die eingesetzte Silanmenge, erreicht.

### Beispiel 3:

### Herstellung von N-[(Triethoxysilyl)-methyl]-piperazin:

905,3 g (10,5 mol) Piperazin und 945 ml Xylol (wasserfrei) als Lösungsmittel werden in einem 4 Liter 4-Hals-Kolben vorgelegt und anschließend mit Stickstoff inertisiert. Man heizt auf eine Temperatur von 100 °C auf, wobei sich das Piperazin vollständig löst. Bei dieser Temperatur tropft man 446,3 g (2,1 mol) Chlormethyl-triethoxysilan innerhalb von 1 h zu und rührt für weitere 15 min nach. Nach einer Zugabe von ca. 1/3 der Silanmenge fällt vermehrt Piperazin-hydrochlorid als Salz aus, jedoch bleibt die Suspension bis zum Ende der Reaktion gut rührbar. Anschließend wird das Reaktionsgemisch auf 110 °C aufgeheizt und das ausgefallene Salz über einen vorgeheizten Filter abfiltriert.

Man kühlt auf ca. 5 °C ab und filtriert den bei dieser Temperatur ausgefallenen Piperazinüberschuss ab. Anschließend destilliert man das Lösungsmittel ab, wobei eventuelle Piperazinreste ebenfalls entfernt werden. Das so erhaltene Rohprodukt wird destillativ gereinigt (84 - 86 °C bei 0,1 mbar). Es wird eine Ausbeute von 357,5 g (1,36 mol), d.h. ca. 65 % bezogen auf die eingesetzte Silanmenge, erreicht.

### Beispiel 4:

### Herstellung von aminofunktionellen Nanopartikeln:

30 g IPA-ST (30,5 %-iges SiO₂-Sol in Isopropanol der Fa. Nissen Chemicals, 12 nm) werden bei Raumtemperatur vorgelegt und mit 2,0 g *N*-[(Ethoxydimethylsilyl)-methyl]-piperazin, hergestellt nach Beispiel 2, versetzt. Die resultierende Mischung wird für 2 h bei 60 °C und für weitere 15 h bei Raumtemperatur gerührt. Es resultiert eine weitgehend kläre Dispersion erhalten, die einen schwachen Tyndall zeigt.

Über ¹H- und ²⁹Si-NMR-Spektroskopie läßt sich in dieser Dispersion kein freies Silan mehr nachweisen, d.h. es hat vollständig mit dem SiO₂-Partikeln abreagiert.

### Beispiel 5:

### Herstellung von aminofunktionellen Siliconölen

15,0 g (5,0 mmol) eines linearen OH-terminierten Siliconöls mit einer mittleren Molmasse von ca. 3000 g/mol werden mit 1,88 g (10,0 mmol) *N*-[(Ethoxydimethylsilyl)-methyl]-piperazin, hergestellt nach Beispiel 2, versetzt. Man läßt für 15 h bei Raumtemperatur rühren. Anschließend wird das entstandene Methanol destillativ entfernt. Über ¹H- und ¹³C-NMR-Spektroskopie läßt sich ein vollständiger Umsatz des eingesetzten Silans nachweisen.

### Beispiel 6:

### Herstellung eines alkoxysilylfunktionellen Epoxidharzes.

Zu einer Lösung von 2.5 g eines Epoxidharzes (Eponex^{®} 1510: Reaktionsprodukt aus hydrogeniertem Bisphenol A und Epichlorhydrin, EEW = 210-220) in 2.5 ml Ethanol wurden 1.5 g *N*-[(Triethoxysilyl)-methyl]-piperazin getropft und das Gemisch unter Rühren für 2 h auf 60 °C erwärmt. ¹H-NMR-Spektrospkopie zeigte die vollständige Umsetzung der Epoxidfunktionen an. Die klare niederviskose Lösung wurde zur Härtung in eine Aluminiumschale gegossen und zeigte eine Hautbildungszeit von 2 min (22 °C, 45% relative Luftfeuchtigkeit). Es bildete sich eine glatte, klare, farblose Schicht.

### Beispiel 7:

### Bestimmung der Reaktivität von α-Aminomethylsilanen und γ-Aminopropylsilanen gegenüber Feuchtigkeit.

Als Maß für die Reaktivität der erfindungsgemäßen und nicht erfindungsgemäßen Silane wurde die Hautbildungszeit α,ω-alkoxysilylfunktioneller Siloxane herangezogen. Dazu wurde ein lineares α,ω-hydroxyfunktionelles Siloxan (mittlere Molmasse: ca. 3000 g/mol) mit 2.5 Äquivalenten des jeweiligen Silans für 20 s bei 27000 rpm in einem Speedmixer (DAC 150 FV der Firma Hausschild) gemischt, das erhaltene Öl ausgegossen und die Hautbildungszeit durch Berühren der Oberfläche mit einem Spatel bestimmt. Die relative Luftfeuchtigkeit betrug 32%.
Hautbildungszeit von *N*-[(Methyldiethoxysilyl)-methyl]-piperazin (erfindungsgemäß): t < 15 min
Hautbildungszeit von γ-Aminopropyl-methyldiethoxysilan (nicht erfindungsgemäß) : t > 5 h

### Beispiel 8:

### Bestimmung der Stabilität von α-Aminomethylsilanen in Gegenwart von Methanol.

Allgemeine Vorschrift: Das α-Aminosilan wird in Methanol-D4 gelöst (10 Gew.-%). Die resultierende Lösung wird wiederholt ¹H-NMR-spektroskopisch vermessen. Zur Bestimmung der Halbwertszeit (t_{1/2}) des α-Aminosilans werden die Integrale des Methylen-Spacers =N-CH₂-Si[(O)R]₃ im unzersetzten α-Aminosilan (δ ca. 2.2 ppm) sowie das Integral der als Zersetzungsprodukt (Spaltung der Si-C Bindung) erhaltenen Methylgruppe =NCH₂D (δ ca. 2.4 ppm) herangezogen.

Die erfindungsgemäßen Silane hergestellt nach den Beispielen 1-3 zeigen nach 4 Wochen noch keine Zersetzung.. Zum Vergleich sind die Halbwertszeiten der Zersetzung einiger α-Aminomethylsilane entsprechend des Standes der Technik dargestellt:
Aminomethyl-methyldimethoxysilan: t_{1/2} = 6 h
Cyclohexylaminomethyl-methyldimethoxysilan: t_{1/2} = 1 Woche
Aminomethyl-trimethoxysilan: t_{1/2} = 19 h
Cyclohexylaminomethyl-trimethoxysilan: t_{1/2} = 3 Tage
i-Butylaminomethyl-trimethoxysilan: t_{1/2} = 1 Woche

## Patentansprüche

1. Alkoxysilane (A), welche die allgemeine Formel [4] 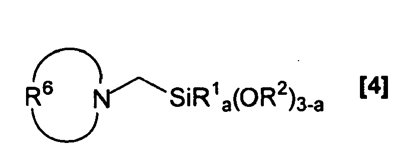 aufweisen, wobei
**R¹** einen gegebenenfalls substituierten Kohlenwasserstoffrest oder eine =N-CR³₂-Gruppe,
**R²** einen Alkylrest mit 1-6 Kohlenstoffatomen,
**a** die Werte 0, 1 oder 2 annehmen kann,
**R³** Wasserstoff oder einen gegebenenfalls substituierten Kohlenwasserstoffrest darstellt,
**R⁴** einen gegebenenfalls substituierten Alkyl-, Aryl- oder Arylalkylrest, der über mindestens eine Carboxyl-, Carbonylgruppe oder eine gegenüber Isocyanaten reaktive OH-, SH- oder NHR⁷-Gruppe verfügt, wobei die Alkylkette gegebenenfalls durch Sauerstoff, Carbonylgruppen, Schwefel oder NR⁷-Gruppen unterbrochen sein kann,
**R⁶** einen difunktionellen, gegebenenfalls substituierten Alkyl- oder Arylalkyrest, der eine gegenüber Isocyanaten reaktive NH-Funktion oder eine NR⁴-Funktion verfügt oder durch mindestens eine gegenüber Isocyanaten reaktive OH-, SH- oder NHR⁷-Gruppe substituiert ist, wobei die Alkylkette gegebenenfalls durch Sauerstoff, Schwefel oder NR⁷-Gruppen unterbrochen sein kann, und
**R⁷** Wasserstoff oder einen gegebenenfalls substituierten Alkyl-, Aryl- oder Arylalkylrest darstellt,
wobei das Silan der Formel [1] 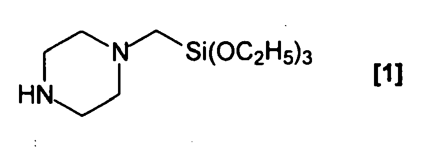 ausgeschlossen ist.

2. Alkoxysilane (A) nach Anspruch 1, bei denen die Reste **R¹** 1 bis 12 C-Atome aufweisen.

3. Alkoxysilane (A) nach Anspruch 1 oder 2, welche die allgemeinen Formeln [6] und [7] 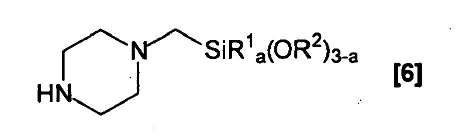 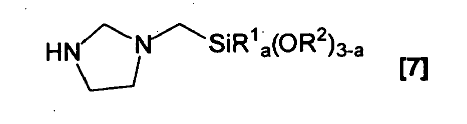 aufweisen, wobei **R¹, R²** und **a** die bei der allgemeinen Formel [4] gemäss Anspruch 1 angegebenen Bedeutungen aufweisen.

4. Verwendung der Silane der allgemeinen Formeln [1],[4], [6] und [7] gemäss Anspruch 1 bis 3 zur Synthese von silanfunktionellen Prepolymeren (P), zur Modifizierung von Acrylaten oder Epoxiden, zur Herstellung von silanmodifizerten Partikeln (Pa), zur Herstellung von modifizierten Siliconharzen (H), und zur Herstellung von organomodifizierten Siliconölen (S).

## Claims

1. Alkoxysilanes (A) which have the general formula [4] 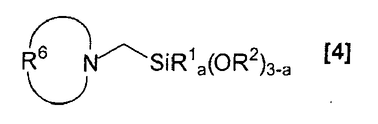 where
**R¹** is an optionally substituted hydrocarbon radical or an =N-CR³₂- group,
**R²** is an alkyl radical having 1-6 carbon atoms,
**a** can adopt the values 0, 1 or 2,
**R³** is hydrogen or an optionally substituted hydrocarbon radical,
**R⁴** is an optionally substituted alkyl, aryl or arylalkyl radical which possesses at least one carboxyl group, carbonyl group or one isocyanate- reactive OH, SH or NHR⁷ group, it being possible for the alkyl chain to be interrupted optionally by oxygen, carbonyl groups, sulfur or NR⁷ groups,
**R⁶** is a difunctional, optionally substituted alkyl or arylalkyl radical, which possesses an isocyanate- reactive NH function or an NR⁴ function or is substituted by at least one isocyanate-reactive OH, SH or NHR⁷ group, it being possible for the alkyl chain to be interrupted optionally by oxygen, sulfur or NR⁷ groups, and
**R⁷** is hydrogen or an optionally substituted alkyl, aryl or arylalkyl radical, the silane of the formula [1] 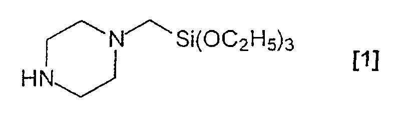
being excluded.

2. Alkoxysilanes (A) according to Claim 1, in which the radicals **R¹** have 1 to 12 C atoms.

3. Alkoxysilanes (A) according to Claim 1 or 2, which have the general formulae [6] and [7] 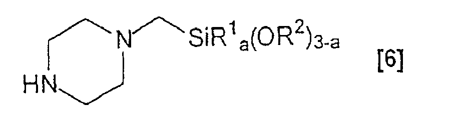 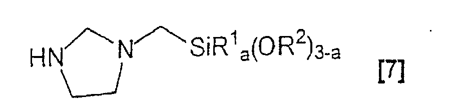 where **R¹, R²** and **a** are as defined for the general formula [4] according to Claim 1.

4. Use of the silanes of the general formulae [1], [4], [6] and [7] according to Claim 1 to 3 for synthesizing silane-functional prepolymers (P), for modifying acrylates or epoxides, for producing silane-modified particles (Pa), for producing modified silicone resins (H), and for producing organically modified silicone oils (S).

## Revendications

1. Alcoxysilanes (A) qui présentent la formule générale [4] 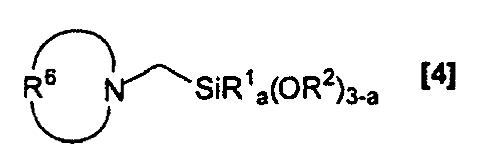 dans laquelle
**R¹** représente un radical hydrocarboné éventuellement substitué ou un groupe =N-CR³₂,
**R²** représente un radical alkyle ayant de 1 à 6 atomes de carbone,
**a** peut avoir la valeur 0, 1 ou 2,
**R³** représente un atome d'hydrogène ou un radical hydrocarboné éventuellement substitué,
**R⁴** représente un radical alkyle, aryle ou arylalkyle éventuellement substitué qui est doté d'au moins un groupe carboxy, carbonyle ou d'un groupe OH, SH ou NHR⁷ réactifs vis-à- vis d'isocyanates, la chaîne alkyle pouvant éventuellement être interrompue par des atomes d'oxygène ou de soufre ou par des groupes carbonyle ou NR⁷,
**R⁶** représente un radical alkyle ou arylalkyle difonctionnel, éventuellement substitué, qui est doté d'une fonction NH réactive vis-à- vis d'isocyanates ou d'une fonction NR⁴ ou est substitué par au moins un groupe OH, SH ou NHR⁷ réactif vis-à-vis d'isocyanates, la chaîne alkyle pouvant éventuellement être interrompue par des atomes d'oxygène ou de soufre ou par des groupes NR⁷, et
**R⁷** représente un atome d'hydrogène ou un radical alkyle, aryle ou arylalkyle éventuellement substitué,
le silane de formule [1] 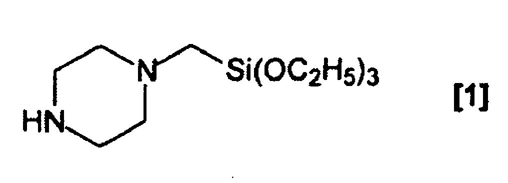 étant exclu.

2. Alcoxysilanes (A) selon la revendication 1, dans lesquels les radicaux R¹ ont de 1 à 12 atomes de carbone.

3. Alcoxysilanes (A) selon la revendication 1 ou 2, qui présentent les formules générales [6] et [7] 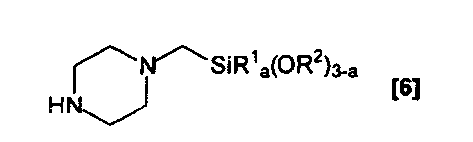 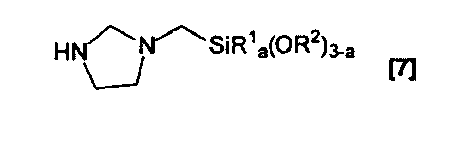 **R¹, R²** et **a** ayant les significations indiquées au sujet de la formule générale [4] selon la revendication 1.

4. Utilisation des silanes de formules générales [1], [4], [6] et [7] selon l'une quelconque des revendications 1 à 3, pour la synthèse de prépolymères (P) à fonctionnalité silane, pour la modification d'acrylates ou d'époxydes, pour la production de particules (Pa) modifiées par des silanes, pour la préparation de résines silicone modifiées (H), et pour la production d'huiles de silicone (S) à modification organique.
